# EUROPEAN PATENT SPECIFICATION

(11) **EP 4 434 860 B1**
(45) Date of publication and mention of the grant of the patent: **26.11.2025**
(21) Application number: 24164275.0
(22) Date of filing: 18.03.2024
(51) Int. Cl.: B62J 6/028, B62J 6/22, B62J 27/00, B62J 50/25

(54) **FRONT LIGHTING DEVICE FOR A STEERABLE ASSEMBLY FOR A BICYCLE**
FRONTBELEUCHTUNGSVORRICHTUNG FÜR EINE LENKBARE ANORDNUNG FÜR EIN FAHRRAD
DISPOSITIF D'ÉCLAIRAGE AVANT POUR UN ENSEMBLE ORIENTABLE POUR BICYCLETTE

(30) Priority: 21.03.2023 NL 2034390
(43) Date of publication of application: 25.09.2024
(73) Proprietor: Trelock GmbH, 48149 Münster (DE)
(72) Inventor: WEWER, Franz-Josef, D-48149 Münster (DE)
(74) Representative: V.O.

(56) References cited:
- JP-A- 2013 144 517
- KR-A- 20190 030 814
- US-A1- 2017 203 802
- US-A1- 2022 144 376
- US-A1- 2023 029 461

## Description

### FIELD

The invention relates to a front lighting device for mounting to a steerable assembly of a bicycle, the steerable assembly being steerable with respect to a main frame of the bicycle for steering a front wheel of the bicycle with respect to the main frame. The invention further relates to such a steerable assembly and to such a bicycle, comprising the front lighting device.

### BACKGROUND

There is an ongoing desire to support the safety of riders of bicycles as well as the safety of traffic near those bicycles. For example, it has been found that bicycles that have accidentally fallen over may be noticed only at a late stage or even not at all by surrounding traffic, creating a risk of secondary accidents and possibly delaying help to the rider of the fallen over bicycle. Such problems may be exacerbated in situations of reduced visibility, such as at night times, in fog, or in heavy traffic. Also, in some cases, the fallen over bicycle may be in a position where it is partly or fully obscured for regular traffic, for example by vegetation.

A front lighting device for mounting to a steerable assembly of a bicycle is known, wherein the steerable assembly is steerable with respect to a main frame of the bicycle for steering a front wheel of the bicycle with respect to the main frame. The known front lighting device comprises a lighting assembly, for example having an LED, for emitting light mainly in a forward riding direction of the front wheel when mounted. Typically, a switch is provided to allow a user to switch the light emission by the lighting assembly on or off.

US20170203802A1 discloses a bicycle indicator light, wherein a left or right light-emitting diode is glowed automatically in response to a left or right inclination signal, respectively, from a gyro-specific integrated circuit. KR20190030814A discloses a smart grip device for a two-wheeled vehicle comprising a light emitting module provided at the outer end of a handgrip and an acceleration sensor. KR 2019 0030814 A discloses all of the features of the preamble of claim 1.

### SUMMARY

An object of the present invention is to improve noticeability of fallen over bicycles for surrounding traffic, in particular in a relatively easy to use, reliable and economical manner.

To that end, an aspect of the invention provides a front lighting device for mounting to a steerable assembly of a bicycle, the steerable assembly being steerable with respect to a main frame of the bicycle for steering a front wheel of the bicycle with respect to the main frame. The front lighting device comprises: a lighting assembly for emitting light mainly in a forward riding direction of the front wheel when mounted; an accelerometer configured to sense proper acceleration along at least two mutually orthogonal axes, including an X-axis corresponding to an axial direction of the front wheel when mounted, and a Z-axis mainly corresponding to the riding direction of the front wheel when mounted; and a controller operatively connected to the lighting assembly and the accelerometer and configured to control the light emission by the lighting assembly depending on the proper acceleration sensed by the accelerometer along the X-axis and the Z-axis.

By making the controlling of the light emission dependent on the proper acceleration sensed by the accelerometer along the X-axis and the Z-axis, the light emission can be automatically changed when the proper acceleration along the X-axis and the Z-axis indicate an orientation of the front lighting device corresponding to an orientation of the steerable assembly when the bicycle has fallen over. Thereby, the light emission from the front lighting device can be automatically controlled to promote noticeability of the bicycle specifically when the bicycle has fallen over, whereas otherwise a light emission may be maintained that corresponds to a normal operational light emission of the front lighting device. Advantageously, it has been found that such an accelerometer-based control of the light emission can reliably automatically distinguish between a normal upright orientation and a fallen over orientation of the bicycle. Meanwhile, the required accelerometer can be relatively inexpensive and moreover can additionally be used for an optional so-called leveling function of the front lighting device, as will be explained further in the detailed description.

A further aspect provides a steerable assembly for a bicycle, configured to be coupled to a main frame of the bicycle so as to be steerable with respect to the main frame for steering the front wheel of the bicycle with respect to the main frame, wherein the steerable assembly is provided with a front lighting device as described herein.

Such a steerable assembly provides advantages corresponding to those described above regarding the front lighting assembly.

A further aspect provides a bicycle comprising a main frame and a steerable assembly as described herein.

Such a bicycle provides advantages corresponding to those described above regarding the front lighting assembly.

Optional advantageous elaborations of the above aspects are provided by the subject-matter of the dependent claims, as explained further in the below detailed description.

### DETAILED DESCRIPTION

In the following, the invention will be explained further with references to non-limiting examples of embodiments and drawings. Although reference is made herein to the drawings, the subject-matter described below may also be understood independent from the drawings. The drawings are schematic and merely show examples. In the drawings, corresponding elements have been provided with corresponding reference signs. In the drawings:
Fig. 1 shows a perspective view of a front lighting assembly with an indication of three mutually orthogonal axes;
Fig. 2 shows a diagram of a front lighting assembly;
Figs. 3 to 6 each show a perspective view of a steerable assembly provided with a front lighting assembly, the steerable assembly being shown as part of a fallen over bicycle, wherein the steerable assembly and thereby the front lighting assembly is in different orientations in the different figures; and
Figs. 7 and 8 each show a perspective view of a rear lighting device shown as part of a fallen over bicycle, wherein the bicycle and thereby the rear lighting device is in different orientations in the different figures.

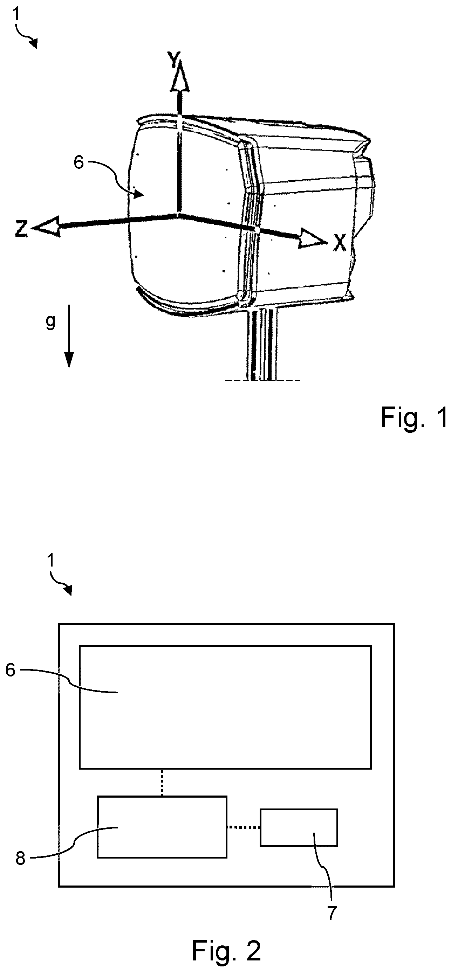

Figs. 1-6 show a front lighting device 1 for mounting to a steerable assembly 2 of a bicycle 3, the steerable assembly 2 being steerable with respect to a main frame 4 of the bicycle 3 for steering a front wheel 5 of the bicycle 3 with respect to the main frame 4. The front lighting device 1 comprises: a lighting assembly 6 for emitting light mainly in a forward riding direction of the front wheel 5 when mounted; an accelerometer 7 (see Fig. 2) configured to sense proper acceleration along at least two mutually orthogonal axes, including an X-axis corresponding to an axial direction of the front wheel 5 when mounted, and a Z-axis mainly corresponding to the riding direction of the front wheel 5 when mounted; and a controller 8 (see Fig. 2) operatively connected to the lighting assembly 6 and the accelerometer 7 and configured to control the light emission by the lighting assembly 6 depending on the proper acceleration sensed by the accelerometer 7 along the X-axis and the Z-axis.

The lighting assembly 6 may be of a type know as such for a front lighting device for a bicycle, for example comprising an LED emitting mainly white light when powered, and optionally comprising one or more passive optical components such as a mirror and/or a lens for collimating and/or directing the emitted light.

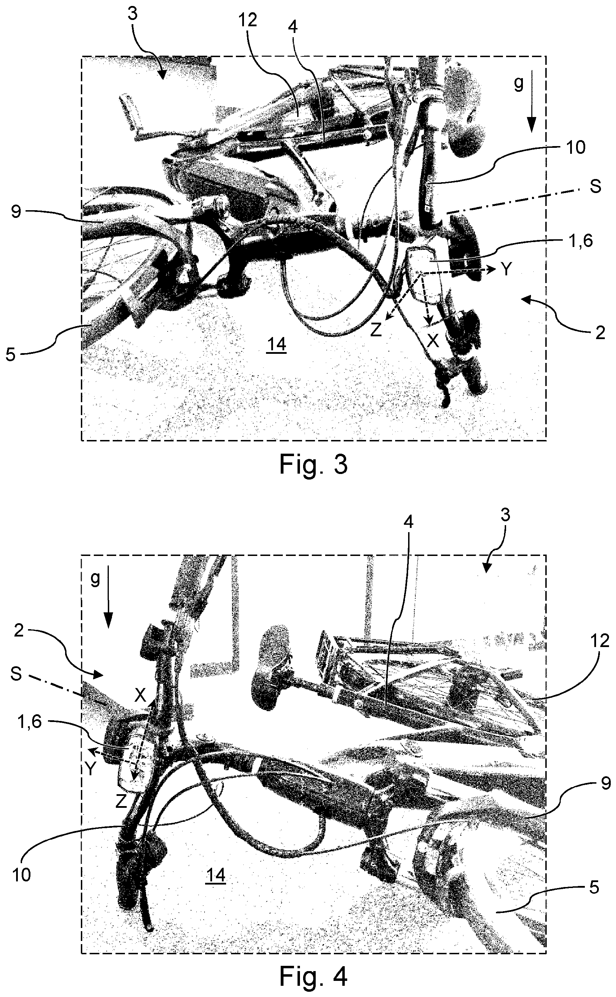

Figs. 3-6 also show a steerable assembly 2 for a bicycle 3, configured to be coupled to a main frame 4 of the bicycle 3 so as to be steerable with respect to the main frame 4 for steering the front wheel 5 of the bicycle 3 with respect to the main frame 4, wherein the steerable assembly 2 is provided with a front lighting device 1 as described herein.

In embodiments, including in the shown example, the steerable assembly 2 comprises at least one of a fork 9 for holding the front wheel 5 and a handlebar 10 for rotating the fork 9 with respect to the main frame 4 about a steering axis S for the front wheel 5. In this respect, it is noted that the mechanical configuration of the steerable assembly 2 may be of a type known as such for bicycles.

In embodiments, including in the shown example, the front lighting device 1 is arranged at the handlebar 10. Alternatively, the front lighting device may for example be arranged at the fork 9.

Figs. 3-8 also show a bicycle 3 comprising a main frame 4 and a steerable assembly 2 as described herein, in particular wherein the steerable assembly 2 is rotatable with respect to the main frame 4 about the steering axis S.

In Fig. 3, the bicycle 3 is shown as having fallen over onto a floor 14 towards a left side of the bicycle 3 with a left end of the handlebar 10 directed to the floor 14, such that the steerable assembly 2 is oriented with respect to the main frame 4 similar to a forward riding configuration of the bicycle 3, i.e. with the handlebar 10 being oriented mainly transverse to the floor 14. In this situation, due to the vertical direction of earth's gravitational force g as a component of proper acceleration, and further due to the bicycle 3 being mainly stationary, the absolute proper acceleration as sensed by the accelerometer 7 of the front lighting device 1 is expected to be largest along the X-axis and smaller (or possibly even zero) along the Y-axis and the Z-axis.

In Fig. 4, the bicycle 3 is shown as having fallen over onto the floor 14 towards a right side of the bicycle 3 with a right end of the handlebar 10 directed to the floor 14, also here such that the steerable assembly 2 is oriented with respect to the main frame 4 similar to a forward riding configuration of the bicycle 3, i.e. with the handlebar 10 being oriented mainly transverse to the floor 14. In this situation, for essentially the same reasons as given above with reference to Fig. 3, the absolute proper acceleration as sensed by the accelerometer 7 of the front lighting device 1 is expected to be large along the X-axis and small along the Y-axis and the Z-axis.

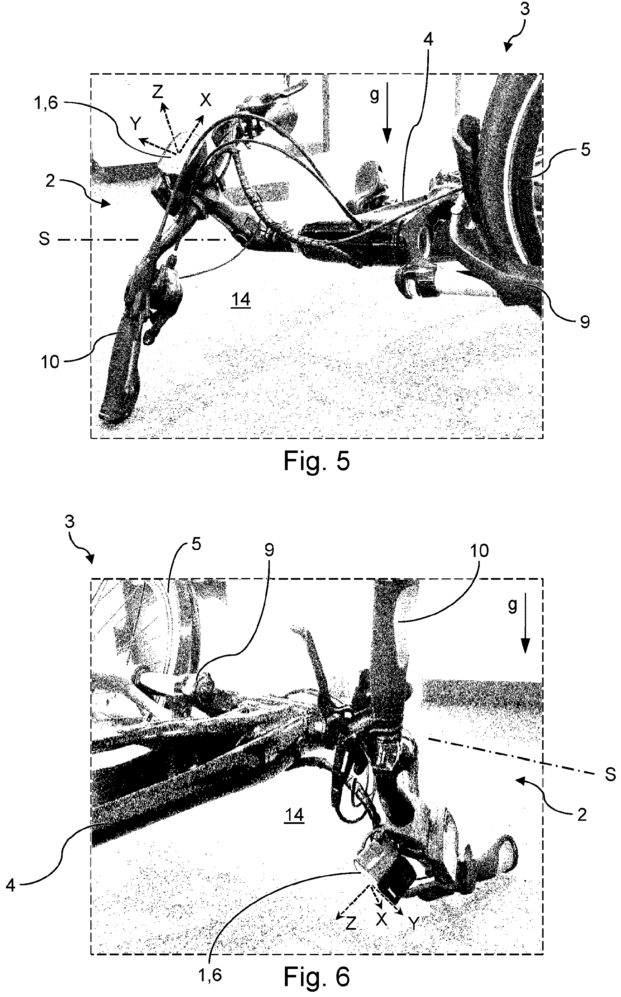

Figs. 5 and 6 show two different possible situations in which the bicycle 3 has fallen over onto the floor 14, however with the handlebar 10 extending not mainly transverse to the floor 14 (as in Figs. 3 and 4) but rather at an oblique angle to the floor 14. In the situation of Fig. 5, the normally forward direction of the handlebar 10, i.e. the main direction of light emission of the front lighting device 1, here the positive Z-direction, is obliquely upwardly, whereas in the situation of Fig. 6 this direction is obliquely downwardly. Depending on the design of the bicycle, the handlebar could also be mainly parallel to the floor, so that such a Z-direction of the front lighting device would be mainly vertical. In such situations, due to the vertical direction of earth's gravitational force g as a component of proper acceleration, and further due to the bicycle 3 being mainly stationary, the absolute proper acceleration as sensed by the accelerometer 7 of the front lighting device 1 is expected to be largest along at least one of the X-axis and the Z-axis, and relatively small along the Y-axis.

In case of a fall, the bicycle 3 may typically be expected to end up in any of the configurations shown in Figs. 3 to 6, or a similar configuration in terms of how the front lighting device 1 is oriented in terms of the axes X, Y and Z of the accelerometer 7. It may be appreciated that in the context of the present invention it is important to reliably detect such situations irrespective of which specific configuration the bicycle ends up in. Such reliability can advantageously be provided by the controller 8 controlling the light emission by the lighting assembly 6 depending on the proper acceleration sensed by the accelerometer 7 along both the X-axis and the Z-axis. For example, the absolute acceleration along the X-axis may reliably signal situations as in Figs. 3 and 4, whereas the absolute acceleration along the Z-axis may more reliably signal situations as in Figs. 5 and 6, in particular in case the handlebar 10 extends more parallel to the floor 14 than transverse to the floor 14. Considering both the X- and the Z-axis therefore promotes reliability. Meanwhile, the Y-axis need not be used. Although the proper acceleration along the Y-axis need not be zero in case of a fallen over bicycle, it is noted that a large proper acceleration along the Y-axis is typically associated with a normal upright orientation of the bicycle 3.

The controller 8 is configured to determine for each of the X-axis and the Z-axis whether or not an absolute value of the sensed proper acceleration along the respective axis exceeds a predetermined threshold, and to automatically control the light emission by the lighting assembly 6 in dependence of the determinations.

It has been found that such use of predetermined threshold provides a relatively simple yet effective and reliable way to control the light emission.

In embodiments, the predetermined threshold corresponds to at least 0.3 times standard gravity, preferably at least 0.4 times standard gravity, more preferably at least 0.5 times standard gravity, in particular for both the X-axis and the Z-axis.

Such a value for the predetermined threshold has been found to provide a good balance between on the one hand reliably detecting when the bicycle has fallen over and on the other hand avoiding so-called false positive detections.

In embodiments, the controller 8 is configured to control the lighting assembly 6 so as to cause an alternating temporal variation in the light emission upon determining that the absolute value of the sensed proper acceleration along at least one of the X-axis and the Z-axis exceeds the predetermined threshold.

The alternating temporal variation can advantageously promote noticeability of the bicycle to nearby traffic.

In embodiments, the alternating temporal variation corresponds to at least one of a blinking pattern and a flashing pattern.

Such a pattern can be particularly effective in promoting noticeability.

In embodiments, the alternating temporal variation is a regularly alternating temporal variation.

Thereby, the temporal variation may be more easily recognized as representing a warning signal as opposed to merely a random fluctuation.

In embodiments, the controller 8 is configured to maintain the alternating temporal variation while the absolute value of the proper acceleration continues to exceed the predetermined threshold.

In this way, the increased noticeability can advantageously be maintained while the bicycle remains in a fallen over state.

In embodiments, the controller 8 is configured to end the alternating temporal variation upon determining that the absolute value of the proper acceleration has returned below the predetermined threshold for both the X-axis and the Z-axis.

It can thereby be avoided that the alternating temporal variation would continue after the bicycle has returned to a normal upright orientation.

In embodiments, the controller 8 is configured to cause the lighting assembly 6 to initiate or resume a continuous light emission upon ending the alternating temporal variation.

In embodiments, the controller 8 is configured to allow the alternating temporal variation only when the sensed proper acceleration along at least one of the X-axis and the Z-axis exceeds the predetermined threshold

In some jurisdictions, it is allowed to produce a light emission with a blinking or flashing or similar pattern from a bicycle only in case of an accident or other emergency. In view thereof, and also in view of general user experience considerations, avoiding a continued temporal variation in the light emission after the bicycle has returned upright, as well as avoiding falsely initiation such a temporal variation, may be important.

In embodiments, for determining whether the predetermined threshold is exceeded or not, the controller 8 is configured to evaluate the absolute value of the proper acceleration along the X-axis and the Z-axis with an evaluation frequency of at least 1 Hz, preferably at least 2 Hz, more preferably at least 4 Hz.

Such an evaluation frequency can advantageously provide rapid adjustment of the light emission in case of a relevant change in the sensed proper acceleration. It shall be appreciated that the evaluation frequency is preferably chosen as high as reasonably possible without incurring an excessive penalty on power consumption or cost of materials. For example, the evaluation frequency may be about 400 Hz.

In embodiments, the accelerometer 7 is configured to sense proper acceleration along three mutually orthogonal axes, including the X-axis, the Z-axis and a Y-axis, the Y-axis being orthogonal to each of the mutually orthogonal X-axis and Z-axis.

Although use of the Y-axis is not strictly necessary in the present context, it may provide additional benefits, for example for an additional function of the front lighting device 1 related to inclination, as detailed hereafter.

In embodiments, the controller 8 is configured to use the accelerometer 7 to determine an inclination angle of the light emission by the lighting assembly 6, at least when the bicycle 3 is in a normal upright orientation, and preferably to cause an indication regarding the determined inclination to be communicated to a user.

Advantageously, a same accelerometer 7 may thus economically be used for several functions of the front lighting device 1.

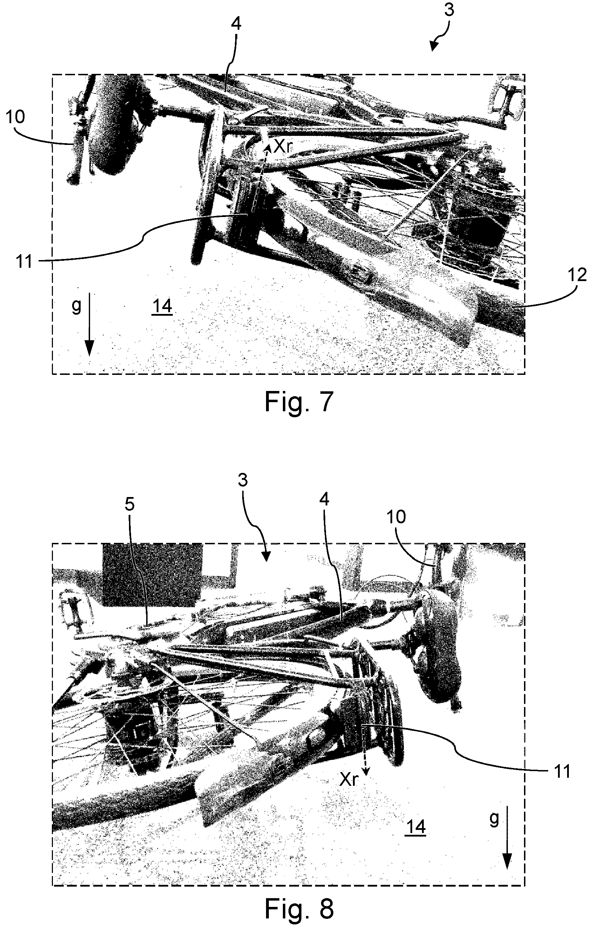

In embodiments, the bicycle 3 is provided with a rear lighting device 11 (see Figs. 7, 8) configured to automatically cause an alternating temporal variation in a light emission from the rear lighting device 11 upon determining, preferably using a respective accelerometer (not shown), that an absolute value of a sensed proper acceleration along an X-axis Xr of the rear lighting device 11 exceeds a predetermined threshold, the X-axis Xr of the rear lighting device 11 corresponding to an axial direction of a rear wheel 12 of the bicycle 3.

By providing such a rear lighting device 11 in addition to the front lighting device 1, noticeability of the fallen over bicycle 3 can be further increased, in particular from multiple viewing directions. The rear lighting device 11 is typically fixed with respect to the main frame 4, so that evaluation of proper acceleration along the respective X-axis Xr only may suffice. Fig. 7 shows the bicycle 3 fallen over onto a floor 14 towards the left side of the bicycle 3; Fig. 8 shows the bicycle 3 fallen over onto the floor 14 towards the right side of the bicycle 3. It can be seen that the X-axis Xr in both those situations is mainly parallel to the direction g of earth's gravitational force, so that the sensed proper acceleration will be large along the X-axis Xr, whereas the proper acceleration along this axis Xr will normally be small when the bicycle 3 is in its normal upright orientation. The rear lighting device 11 may otherwise be of a type known as such, for example comprising one or more LEDs, and being configured for emitting mainly red light as is typical for a rear lighting device. The rear lighting device 11 may optionally be configured to act as a brake light, i.e. increasing or otherwise changing its red light emission in case of a determination of a deceleration of the bicycle, the determination using the optional accelerometer of the rear lighting device 11.

Although the invention has been explained further herein using examples of embodiments and drawings, these do not limit the scope of the invention as defined by the claims. For example, the controller and the accelerometer may be provided as operatively connected yet separate components, or may be mutually integrated. The controller may be distributed, e.g. partly being formed together with the accelerometer and partly as an operatively connected yet separate component.

### LIST OF REFERENCE SIGNS

- 1.: Front lighting device
- 2.: Steerable assembly
- 3.: Bicycle
- 4.: Main frame
- 5.: Front wheel
- 6.: Lighting assembly
- 7.: Accelerometer
- 8.: Controller
- 9.: Fork
- 10.: Handlebar
- 11.: Rear lighting device
- 12.: Rear wheel
- 14.: Floor
- 15.: Wall
- g.: Vertical direction of earth's gravitational force
- S.: Steering axis
- X,Y,Z.: Mutually orthogonal axes of front lighting device
- Xr.: X-axis of rear lighting device

## Claims

1. Front lighting device (1) for mounting to a steerable assembly (2) of a bicycle (3), the steerable assembly (2) being steerable with respect to a main frame (4) of the bicycle (3) for steering a front wheel (5) of the bicycle (3) with respect to the main frame (4), wherein the front lighting device (1) comprises:
- a lighting assembly (6) for emitting light mainly in a forward riding direction of the front wheel (5) when mounted;
wherein the front lighting device (1) comprises:
- an accelerometer (7) configured to sense proper acceleration along at least two mutually orthogonal axes, including an X-axis corresponding to an axial direction of the front wheel (5) when mounted, and a Z-axis mainly corresponding to the riding direction of the front wheel (5) when mounted; and
- a controller (8) operatively connected to the lighting assembly (6) and the accelerometer (7) and configured to control the light emission by the lighting assembly (6) depending on the proper acceleration sensed by the accelerometer (7) along the X-axis and the Z-axis,
**characterized in that** the controller (8) is configured to determine for each of the X-axis and the Z-axis whether or not an absolute value of the sensed proper acceleration along the respective axis exceeds a predetermined threshold, and to automatically control the light emission by the lighting assembly (6) in dependence of the determinations.

2. Front lighting device according to claim 1, wherein the predetermined threshold corresponds to at least 0.3 times standard gravity, preferably at least 0.4 times standard gravity, more preferably at least 0.5 times standard gravity, in particular for both the X-axis and the Z-axis.

3. Front lighting device according to claim 1 or 2, wherein the controller (8) is configured to control the lighting assembly (6) so as to cause an alternating temporal variation in the light emission upon determining that the absolute value of the sensed proper acceleration along at least one of the X-axis and the Z-axis exceeds the predetermined threshold,
wherein the alternating temporal variation preferably corresponds to at least one of a blinking pattern and a flashing pattern, and/or wherein the alternating temporal variation is preferably a regularly alternating temporal variation.

4. Front lighting device according to claim 3, wherein the controller (8) is configured to maintain the alternating temporal variation while the absolute value of the proper acceleration continues to exceed the predetermined threshold.

5. Front lighting device according to any of claims 3 - 4, wherein the controller (8) is configured to end the alternating temporal variation upon determining that the absolute value of the proper acceleration has returned below the predetermined threshold for both the X-axis and the Z-axis.

6. Front lighting device according to claim 5, wherein the controller (8) is configured to cause the lighting assembly (6) to initiate or resume a continuous light emission upon ending the alternating temporal variation.

7. Front lighting device according to any of claims 3 - 6, wherein the controller (8) is configured to allow the alternating temporal variation only when the sensed proper acceleration along at least one of the X-axis and the Z-axis exceeds the predetermined threshold

8. Front lighting device according to any of the preceding claims, wherein, for determining whether the predetermined threshold is exceeded or not, the controller (8) is configured to evaluate the absolute value of the proper acceleration along the X-axis and the Z-axis with an evaluation frequency of at least 1 Hz, preferably at least 2 Hz, more preferably at least 4 Hz.

9. Front lighting device according to any of the preceding claims, wherein the accelerometer (7) is configured to sense proper acceleration along three mutually orthogonal axes, including the X-axis, the Z-axis and a Y-axis, the Y-axis being orthogonal to each of the mutually orthogonal X-axis and Z-axis.

10. Front lighting device according to any of the preceding claims, wherein the controller (8) is configured to use the accelerometer (7) to determine an inclination angle of the light emission by the lighting assembly (6), at least when the bicycle (3) is in a normal upright orientation, and preferably to cause an indication regarding the determined inclination to be communicated to a user.

11. Steerable assembly (2) for a bicycle (3), configured to be coupled to a main frame (4) of the bicycle (3) so as to be steerable with respect to the main frame (4) for steering the front wheel (5) of the bicycle (3) with respect to the main frame (4), wherein the steerable assembly (2) is provided with a front lighting device (1) according to any of the preceding claims.

12. Steerable assembly according to claim 11, comprising at least one of a fork (9) for holding the front wheel (5) and a handlebar (10) for rotating the fork (9) with respect to the main frame (4) about a steering axis (S) for the front wheel (5),
wherein the front lighting device (1) is preferably arranged at the handlebar (10).

13. Bicycle (3) comprising a main frame (4) and a steerable assembly (2) according to any of claims 11 - 12.

14. Bicycle according to claim 13, provided with a rear lighting device (11) configured to automatically cause an alternating temporal variation in a light emission from the rear lighting device (11) upon determining that an absolute value of a sensed proper acceleration along an X-axis of the rear lighting device (11) exceeds a predetermined threshold, the X-axis of the rear lighting device (11) corresponding to an axial direction of a rear wheel (12) of the bicycle (3).

## Patentansprüche

1. Frontbeleuchtungsvorrichtung (1) zum Befestigen an einer lenkbaren Anordnung (2) eines Fahrrads (3), wobei die lenkbare Anordnung (2) in Bezug auf einen Hauptrahmen (4) des Fahrrads (3) lenkbar ist, um ein Vorderrad (5) des Fahrrads (3) in Bezug auf den Hauptrahmen (4) zu lenken, wobei die Frontbeleuchtungsvorrichtung (1) Folgendes umfasst:
- eine Beleuchtungsanordnung (6) zum Emittieren von Licht hauptsächlich in einer Vorwärtsfahrtrichtung des Vorderrads (5), wenn montiert;
wobei die Frontbeleuchtungsvorrichtung (1) Folgendes umfasst:
- einen Beschleunigungsmesser (7), dazu konfiguriert, eine Eigenbeschleunigung entlang mindestens zweier zueinander senkrechter Achsen zu erfassen, einschließlich einer X-Achse, entsprechend einer axialen Richtung des Vorderrads (5), wenn montiert, und einer Z-Achse, im Wesentlichen entsprechend der Fahrtrichtung des Vorderrads (5), wenn montiert; und
- eine Steuerung (8), wirkverbunden mit der Beleuchtungsanordnung (6) und dem Beschleunigungsmesser (7) und dazu konfiguriert, die Lichtemission durch die Beleuchtungsanordnung (6) in Abhängigkeit von der Eigenbeschleunigung, erfasst vom Beschleunigungsmesser (7) entlang der X-Achse und der Z-Achse, zu steuern,
**dadurch gekennzeichnet, dass** die Steuerung (8) dazu konfiguriert ist, für jede von der X-Achse und der Z-Achse festzustellen, ob ein Absolutwert der erfassten Eigenbeschleunigung entlang der jeweiligen Achse einen vorbestimmten Schwellenwert überschreitet oder nicht, und die Lichtemission durch die Beleuchtungsanordnung (6) in Abhängigkeit von den Feststellungen automatisch zu steuern.

2. Frontbeleuchtungsvorrichtung nach Anspruch 1, wobei der vorbestimmte Schwellenwert mindestens dem 0,3-Fachen der Standardschwerkraft, vorzugsweise mindestens dem 0,4-Fachen der Standardschwerkraft, stärker bevorzugt mindestens dem 0,5-Fachen der Standardschwerkraft, insbesondere sowohl für die X- als auch für die Z-Achse, entspricht.

3. Frontbeleuchtungsvorrichtung nach Anspruch 1 oder 2, wobei die Steuerung (8) dazu konfiguriert ist, die Beleuchtungsanordnung (6) so zu steuern, dass sie bei der Feststellung, dass der Absolutwert der erfassten Eigenbeschleunigung entlang mindestens einer von der X-Achse und der Z-Achse den vorbestimmten Schwellenwert überschreitet, eine abwechselnde zeitliche Variation in der Lichtemission veranlasst,
wobei die abwechselnde zeitliche Variation vorzugsweise wenigstens einer von einem Blinkmuster und einem Aufleuchtmuster entspricht, und/oder wobei die abwechselnde zeitliche Variation vorzugsweise eine regelmäßig abwechselnde zeitliche Variation ist.

4. Frontbeleuchtungsvorrichtung nach Anspruch 3, wobei die Steuerung (8) dazu konfiguriert ist, die abwechselnde zeitliche Variation aufrechtzuerhalten, während der Absolutwert der Eigenbeschleunigung weiterhin den vorbestimmten Schwellenwert überschreitet.

5. Frontbeleuchtungsvorrichtung nach einem der Ansprüche 3 bis 4, wobei die Steuerung (8) dazu konfiguriert ist, die abwechselnde zeitliche Variation zu beenden, wenn festgestellt wird, dass der Absolutwert der Eigenbeschleunigung sowohl für die X-Achse als auch für die Z-Achse unter den vorbestimmten Schwellenwert zurückgekehrt ist.

6. Frontbeleuchtungsvorrichtung nach Anspruch 5, wobei die Steuerung (8) dazu konfiguriert ist, die Beleuchtungsanordnung (6) dazu zu veranlassen, bei Beendigung der abwechselnden zeitlichen Variation eine kontinuierliche Lichtemission einzuleiten oder wieder aufzunehmen.

7. Frontbeleuchtungsvorrichtung nach einem der Ansprüche 3 bis 6, wobei die Steuerung (8) dazu konfiguriert ist, die abwechselnde zeitliche Variation nur zuzulassen, wenn die erfasste Eigenbeschleunigung entlang mindestens einer von der X-Achse und der Z-Achse den vorbestimmten Schwellenwert überschreitet.

8. Frontbeleuchtungseinrichtung nach einem der vorhergehenden Ansprüche, wobei zur Bestimmung, ob der vorbestimmte Schwellenwert überschritten wird oder nicht, die Steuerung (8) dazu konfiguriert ist, den Absolutwert der Eigenbeschleunigung entlang der X-Achse und der Z-Achse mit einer Auswertungsfrequenz von mindestens 1 Hz, bevorzugt mindestens 2 Hz, stärker bevorzugt mindestens 4 Hz, zu bewerten.

9. Frontbeleuchtungsvorrichtung nach einem der vorhergehenden Ansprüche, wobei der Beschleunigungsmesser (7) dazu konfiguriert ist, eine Eigenbeschleunigung entlang dreier zueinander senkrechter Achsen, einschließlich der X-Achse, der Z-Achse und einer Y-Achse, zu erfassen, wobei die Y-Achse senkrecht zu jeder von der X-Achse und der Z-Achse ist, die zueinander senkrecht sind.

10. Frontbeleuchtungsvorrichtung nach einem der vorhergehenden Ansprüche, wobei die Steuerung (8) dazu konfiguriert ist, den Beschleunigungsmesser (7) zu verwenden, um einen Neigungswinkel der Lichtemission durch die Beleuchtungsanordnung (6) festzustellen, zumindest, wenn sich das Fahrrad (3) in einer normalen aufrechten Ausrichtung befindet, und vorzugsweise zu veranlassen, dass eine Angabe bezüglich der festgestellten Neigung an einen Benutzer kommuniziert wird.

11. Lenkbare Anordnung (2) für ein Fahrrad (3), dazu konfiguriert, an einen Hauptrahmen (4) des Fahrrads (3) gekoppelt zu sein, sodass es in Bezug auf den Hauptrahmen (4) zur Lenkung des Vorderrads (5) des Fahrrads (3) in Bezug auf den Hauptrahmen (4) lenkbar ist, wobei die lenkbare Anordnung (2) mit einer Frontbeleuchtungsvorrichtung (1) nach einem der vorhergehenden Ansprüche versehen ist.

12. Lenkbare Anordnung nach Anspruch 11, umfassend wenigstens eine/n von einer Gabel (9) zum Halten des Vorderrads (5) und einem Lenker (10) zum Drehen der Gabel (9) in Bezug auf den Hauptrahmen (4) um eine Lenkachse (S) für das Vorderrad (5),
wobei die Frontbeleuchtungsvorrichtung (1) vorzugsweise am Lenker (10) angeordnet ist.

13. Fahrrad (3), umfassend einen Hauptrahmen (4) und eine lenkbare Anordnung (2) nach einem der Ansprüche 11 bis 12.

14. Fahrrad nach Anspruch 13, versehen mit einer Heckbeleuchtungsvorrichtung (11), dazu konfiguriert, automatisch eine abwechselnde zeitliche Variation in einer Lichtemission von der Heckbeleuchtungsvorrichtung (11) zu veranlassen, wenn festgestellt wird, dass ein Absolutwert einer erfassten Eigenbeschleunigung entlang einer X-Achse der Heckbeleuchtungsvorrichtung (11) einen vorbestimmten Schwellenwert überschreitet, wobei die X-Achse der Heckbeleuchtungsvorrichtung (11) einer axialen Richtung eines Hinterrads (12) des Fahrrads (3) entspricht.

## Revendications

1. Dispositif d'éclairage avant (1) pour montage sur un ensemble orientable (2) d'une bicyclette (3), l'ensemble orientable (2) pouvant être orienté par rapport à un cadre principal (4) de la bicyclette (3) pour orienter une roue avant (5) de la bicyclette (3) par rapport au cadre principal (4), dans lequel le dispositif d'éclairage avant (1) comprend :
- un ensemble d'éclairage (6) pour émettre de la lumière principalement dans une direction de déplacement vers l'avant de la roue avant (5) lorsqu'elle est montée ;
dans lequel le dispositif d'éclairage avant (1) comprend :
- un accéléromètre (7) configuré pour détecter une accélération non gravitationnelle linéaire le long d'au moins deux axes mutuellement orthogonaux, y compris un axe X correspondant à une direction axiale de la roue avant (5) lorsqu'elle est montée, et un axe Z correspondant principalement à la direction de déplacement de la roue avant (5) lorsqu'elle est montée ; et
- un dispositif de commande (8) connecté de manière opérationnelle à l'ensemble d'éclairage (6) et à l'accéléromètre (7) et configuré pour commander l'émission de lumière par l'ensemble d'éclairage (6) en fonction de l'accélération non gravitationnelle linéaire détectée par l'accéléromètre (7) le long de l'axe X et de l'axe Z,
**caractérisé en ce que**
le dispositif de commande (8) est configuré pour déterminer pour chacun de l'axe X et de l'axe Z si une valeur absolue de l'accélération non gravitationnelle linéaire détectée le long de l'axe respectif dépasse ou non un seuil prédéterminé, et pour commander automatiquement l'émission de lumière par l'ensemble d'éclairage (6) en fonction des déterminations.

2. Dispositif d'éclairage avant selon la revendication 1, dans lequel le seuil prédéterminé correspond à au moins 0,3 fois la gravité standard, de préférence au moins 0,4 fois la gravité standard, de manière plus préférée au moins 0,5 fois la gravité standard, en particulier à la fois pour l'axe X et l'axe Z.

3. Dispositif d'éclairage avant selon la revendication 1 ou 2, dans lequel le dispositif de commande (8) est configuré pour commander l'ensemble d'éclairage (6) de manière à provoquer une variation temporelle alternée de l'émission de lumière lorsqu'il est déterminé que la valeur absolue de l'accélération non gravitationnelle linéaire détectée le long d'au moins l'un de l'axe X et de l'axe Z dépasse le seuil prédéterminé,
dans lequel la variation temporelle alternée correspond de préférence à au moins un parmi un motif de clignotement et un motif de flash, et/ou dans lequel la variation temporelle alternée est de préférence une variation temporelle alternée régulièrement.

4. Dispositif d'éclairage avant selon la revendication 3, dans lequel le dispositif de commande (8) est configuré pour maintenir la variation temporelle alternée alors que la valeur absolue de l'accélération non gravitationnelle linéaire continue de dépasser le seuil prédéterminé.

5. Dispositif d'éclairage avant selon l'une quelconque des revendications 3 à 4, dans lequel le dispositif de commande (8) est configuré pour mettre fin à la variation temporelle alternée lorsqu'il est déterminé que la valeur absolue de l'accélération non gravitationnelle linéaire est revenue en dessous du seuil prédéterminé à la fois pour l'axe X et l'axe Z.

6. Dispositif d'éclairage avant selon la revendication 5, dans lequel le dispositif de commande (8) est configuré pour amener l'ensemble d'éclairage (6) à initier ou à reprendre une émission de lumière continue à la fin de la variation temporelle alternée.

7. Dispositif d'éclairage avant selon l'une quelconque des revendications 3 à 6, dans lequel le dispositif de commande (8) est configuré pour permettre la variation temporelle alternée uniquement lorsque l'accélération non gravitationnelle linéaire détectée le long d'au moins l'un de l'axe X et de l'axe Z dépasse le seuil prédéterminé.

8. Dispositif d'éclairage avant selon l'une quelconque des revendications précédentes, dans lequel, pour déterminer si le seuil prédéterminé est dépassé ou non, le dispositif de commande (8) est configuré pour évaluer la valeur absolue de l'accélération non gravitationnelle linéaire le long de l'axe X et de l'axe Z avec une fréquence d'évaluation d'au moins 1 Hz, de préférence d'au moins 2 Hz, de manière plus préférée d'au moins 4 Hz.

9. Dispositif d'éclairage avant selon l'une quelconque des revendications précédentes, dans lequel l'accéléromètre (7) est configuré pour détecter une accélération non gravitationnelle linéaire le long de trois axes mutuellement orthogonaux, y compris l'axe X, l'axe Z et un axe Y, l'axe Y étant orthogonal à chacun des axes X et Z mutuellement orthogonaux.

10. Dispositif d'éclairage avant selon l'une quelconque des revendications précédentes, dans lequel le dispositif de commande (8) est configuré pour utiliser l'accéléromètre (7) pour déterminer un angle d'inclinaison de l'émission de lumière par l'ensemble d'éclairage (6), au moins lorsque la bicyclette (3) est dans une orientation verticale normale, et de préférence pour provoquer une indication concernant l'inclinaison déterminée à communiquer à un utilisateur.

11. Ensemble orientable (2) pour une bicyclette (3), configuré pour être couplé à un cadre principal (4) de la bicyclette (3) de manière à pouvoir être orienté par rapport au cadre principal (4) pour orienter la roue avant (5) de la bicyclette (3) par rapport au cadre principal (4), dans lequel l'ensemble orientable (2) est pourvu d'un dispositif d'éclairage avant (1) selon l'une quelconque des revendications précédentes.

12. Ensemble orientable selon la revendication 11, comprenant au moins un parmi une fourche (9) pour maintenir la roue avant (5) et un guidon (10) pour faire tourner la fourche (9) par rapport au cadre principal (4) autour d'un axe d'orientation (S) pour la roue avant (5),
dans lequel le dispositif d'éclairage avant (1) est de préférence agencé au niveau du guidon (10).

13. Bicyclette (3) comprenant un cadre principal (4) et un ensemble orientable (2) selon l'une quelconque des revendications 11 à 12.

14. Bicyclette selon la revendication 13, pourvue d'un dispositif d'éclairage arrière (11) configuré pour provoquer automatiquement une variation temporelle alternée dans une émission de lumière à partir du dispositif d'éclairage arrière (11) lors de la détermination qu'une valeur absolue d'une accélération non gravitationnelle linéaire détectée le long d'un axe X du dispositif d'éclairage arrière (11) dépasse un seuil prédéterminé, l'axe X du dispositif d'éclairage arrière (11) correspondant à une direction axiale d'une roue arrière (12) de la bicyclette (3).
